# FASCICULE DE BREVET EUROPEEN

(11) **EP 1 593 911 B1**
(45) Date de publication et mention de la délivrance du brevet: **06.10.2010**
(21) Numéro de dépôt: 05290827.4
(22) Date de dépôt: 14.04.2005
(51) Int. Cl.: F23R 3/20

(54) **Dispositif d'alimentation en air et en carburant d'un anneau-brûleur dans une chambre de postcombustion**
Zündluft- und Kraftstoffzuführvorrichtung für Brennerring eines Nachbrenner
Air and fuel delivery system for a post combustor burning ring

(30) Priorité: 05.05.2004 FR 0404797
(43) Date de publication de la demande: 09.11.2005
(73) Titulaire: SNECMA, 75015 Paris (FR)
(72) Inventeur: Bunel, Jacques, 94260 Fresnes (FR); Roche, Jacques, 87160 St. Sulpice les Feuilles (FR)
(74) Mandataire: Ramey, Daniel

(56) Documents cités:
- EP-A- 0 879 995
- FR-A- 1 321 385
- FR-A- 2 709 342
- US-A- 5 212 945
- US-A- 5 400 589
- US-A- 6 112 516

## Description

La présente invention concerne un dispositif d'alimentation en air et en carburant d'un anneau-brûleur dans une chambre de postcombustion, en particulier d'un turboréacteur à double flux.

Les systèmes de postcombustion des turboréacteurs comprennent en général une pluralité de bras accroche-flammes s'étendant radialement par rapport à l'axe du turboréacteur depuis un carter externe d'une chambre de postcombustion jusque dans le flux primaire chaud formé par les gaz de combustion, chaque bras accroche-flammes contenant une rampe d'alimentation en carburant qui s'étend radialement dans le bras depuis le carter externe.

Un anneau-brûleur est porté par la partie aval des bras accroche-flammes et s'étend soit dans le flux primaire au voisinage de la séparation entre le flux primaire et le flux secondaire froid généré par la soufflante du turboréacteur et s'écoulant autour de la chambre de combustion, soit dans le flux secondaire (comme c'est le cas dans le document FR-A1-2 709 342). Cet anneau peut être formé de secteurs dont les extrémités en regard sont disposées sensiblement bout à bout et sont montées sur les bras accroche-flammes. Ces secteurs d'anneau sont alimentés en carburant par des conduits raccordés radialement au carter externe et sont également alimentés en air à partir du flux secondaire.

Lorsque l'anneau-brûleur s'étend dans la partie de la chambre de post-combustion où circule le flux primaire, ses moyens d'alimentation en air et en carburant doivent traverser le flux secondaire et une partie du flux primaire et créent des pertes de charge relativement importante dans ces flux, qui diminuent le rendement du turboréacteur.

Comme la température du flux primaire dans la chambre de postcombustion peut atteindre 2000°K en mode postcombustion, il est nécessaire de prévoir une protection thermique des moyens d'alimentation en carburant de l'anneau-brûleur, et cette protection thermique est susceptible d'augmenter encore les pertes de charge dans les flux primaire et secondaire.

L'invention a notamment pour but d'apporter une solution simple, économique et efficace à ces problèmes.

Elle propose à cet effet une chambre de postcombustion d'un turboréacteur à double flux, comprenant une pluralité de bras accroche-flammes s'étendant radialement autour de l'axe de cette chambre depuis un carter externe, un anneau-brûleur situé dans le flux primaire et formé de secteurs d'anneau montés sensiblement bout à bout sur les bras accroche-flammes et des moyens d'alimentation en air et en carburant des secteurs d'anneau-brûleur, caractérisée en ce que les moyens d'alimentation en air et en carburant des secteurs d'anneau-brûleur s'étendent radialement entre l'anneau-brûleur et le carter externe de la chambre de postcombustion à l'intérieur des bras accroche-flammes et sont raccordés aux secteurs d'anneau-brûleur aux extrémités de ces secteurs.

Les moyens d'alimentation en air et en carburant des secteurs d'anneau-brûleur sont logés dans les bras accroche-flammes et ainsi protégés thermiquement par les bras accroche-flammes. De plus, cette disposition ne crée pas de pertes de charge supplémentaires dans les flux primaire et secondaire et ne diminue pas le rendement du turboréacteur.

Selon une autre caractéristique de l'invention, les moyens d'alimentation en air des secteurs d'anneau comprennent des caissons de distribution formés ou logés dans les secteurs d'anneau et alimentés en air par au moins une de leurs extrémités débouchant à l'intérieur d'un bras accroche-flammes dont la partie radialement externe comporte une ouverture de captation d'une partie du flux secondaire circulant dans le carter externe.

La circulation de l'air se fait donc à l'intérieur de chaque bras accroche-flammes depuis l'ouverture de captation de ce bras jusque dans au moins un caisson de distribution d'un secteur d'anneau porté par ce bras.

De façon avantageuse, les caissons de distribution d'air comportent à chacune de leurs extrémités une ouverture d'entrée d'air formée dans leur paroi amont, cette ouverture d'entrée d'air débouchant à l'intérieur d'un bras accroche-flammes.

Selon une autre caractéristique de l'invention, les secteurs d'anneau-brûleur comprennent chacun une rampe d'alimentation en carburant qui s'étend sur sensiblement toute la longueur du secteur depuis une extrémité de celui-ci et qui est raccordée à cette extrémité à un conduit s'étendant sensiblement radialement à l'intérieur du bras accroche-flammes jusqu'au carter externe.

Chaque secteur d'anneau est ainsi individuellement alimenté en carburant par un conduit radial logé dans le bras accroche-flammes, ce conduit radial et le conduit d'alimentation en carburant du bras accroche-flammes se trouvant avantageusement dans un même plan passant par l'axe de la chambre de postcombustion, pour réduire les pertes de charge. Le conduit d'alimentation en carburant du secteur d'anneau est par exemple en amont de la rampe d'alimentation du bras accroche-flammes.

D'autres avantages et caractéristiques de l'invention apparaîtront à la lecture de la description suivante faite à titre d'exemple non limitatif et en référence aux dessins annexés dans lesquels :
- la figure 1 est une vue schématique partielle en coupe axiale d'une chambre de postcombustion d'un turboréacteur à double flux ;
- la figure 2 est une vue schématique partielle en perspective d'un secteur d'anneau-brûleur porté par un bras accroche-flammes ;
- la figure 3 est une vue schématique de face, vue du côté aval, d'une rampe d'alimentation en carburant d'un secteur d'anneau-brûleur selon l'invention;
- la figure 4 est une vue schématique de dessus du secteur d'anneau-brûleur de la figure 3 ;
- la figure 5 est une vue en coupe selon la ligne V-V de la figure 3 ;
- la figure 6 est une vue en coupe selon la ligne VI-VI de la figure 3.

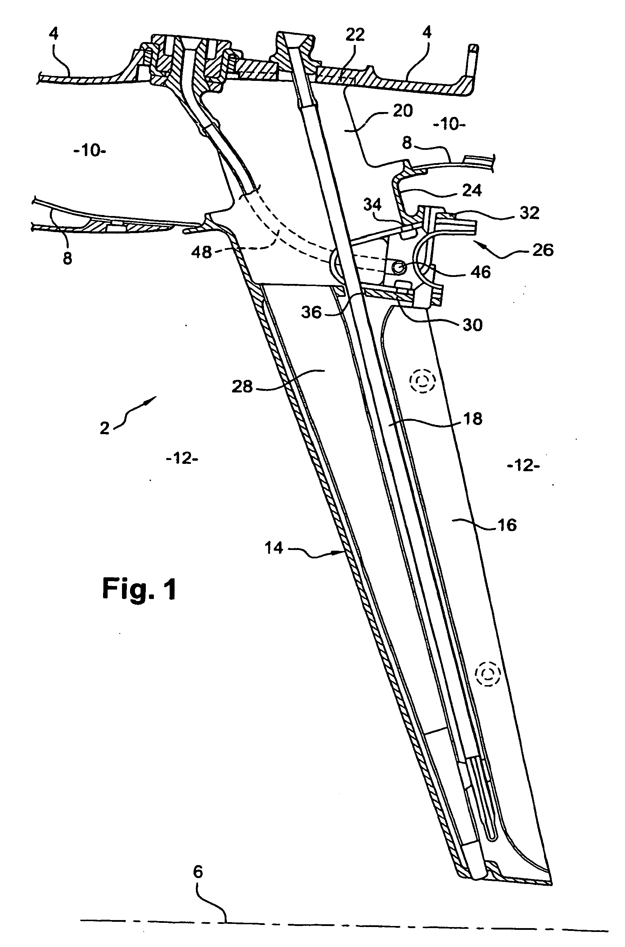

On se réfère d'abord à la figure 1 qui représente une partie d'une chambre de postcombustion 2 d'un turboréacteur à double flux, disposée en aval de la turbine du turboréacteur.

La chambre de postcombustion 2 comprend un carter externe sensiblement cylindrique 4 d'axe 6 et une paroi interne cylindrique 8 coaxiale au carter externe 4, qui délimitent entre eux un espace annulaire 10 s'étendant d'amont en aval, dans lequel s'écoule le flux froid ou flux secondaire du turboréacteur, généré par une soufflante à l'amont du turboréacteur et servant à augmenter la poussée et à ventiler des composants du turboréacteur.

La paroi interne 8 délimite un espace cylindrique interne 12 s'étendant d'amont en aval, dans lequel s'écoule le flux chaud ou flux primaire du turboréacteur, qui est constitué par les gaz d'échappement de la chambre de combustion du turboréacteur.

La postcombustion permet d'augmenter la poussée du turboréacteur, par injection d'air et de carburant dans le flux primaire et combustion du mélange dans la chambre de postcombustion 2.

Cette chambre 2 comprend un certain nombre de bras accroche-flammes 14 qui s'étendent en oblique dans des plans passant par l'axe 6, leur extrémité radialement interne étant décalée vers l'aval.

Les bras accroche-flammes 14 sont portés par le carter 4 et comprennent une partie radialement externe s'étendant dans le flux secondaire et une partie radialement interne s'étendant dans le flux primaire.

La partie radialement interne de chaque bras 14 est formée d'un dièdre creux dont l'arête est orientée vers l'amont et qui est fermé vers l'aval par une paroi incurvée 16 formant écran de protection thermique d'une rampe 18 d'alimentation en carburant qui s'étend dans le bras 14 et dont une extrémité supérieure est fixée dans un orifice du carter externe 4 par des moyens appropriés.

Dans la partie radialement externe du bras 14, l'arête du dièdre est découpée et forme une ouverture de captation d'une partie du flux secondaire. Les deux parois latérales 20 de cette partie du dièdre sont fixées sur le carter externe 4 précité par l'intermédiaire de pattes 22 présentant des orifices de passage de moyens de fixation du type vis - écrou ou analogues.

L'espace annulaire d'écoulement du flux secondaire est réduit sensiblement de moitié en dimension radiale en aval des bras accroche-flammes 14 par une paroi annulaire 24 montée entre le carter interne 8 et un anneau-brûleur 26 monté dans le flux primaire sur la partie aval des bras accroche-flammes 14, de sorte qu'en fonctionnement, une partie du flux secondaire pénètre dans chaque bras 14 et circule dans un caisson de ventilation 28 logé dans le bras 14 et s'étendant le long de la rampe d'alimentation 18 en amont de celle-ci. Le caisson 28 comprend sur toute sa longueur des trous débouchant vers la rampe d'alimentation 18 qui comprend elle-même des trous de pulvérisation de carburant orientés vers l'aval, sur sa partie radialement interne s'étendant dans le flux primaire.

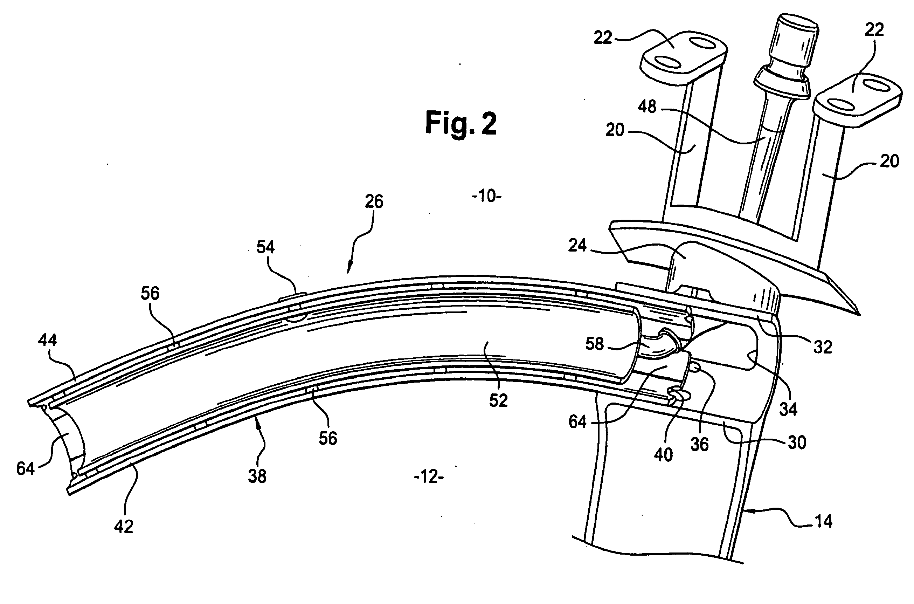

Chaque bras accroche-flammes 14 comprend au voisinage de sa partie radialement externe, deux plaques sensiblement parallèles 30, 32, respectivement radialement interne et radialement externe, à orientation circonférentielle, qui servent de support et de guidage à l'anneau-brûleur 26, la plaque externe 32 comprenant du côté amont une ouverture 34 sensiblement rectangulaire débouchant à l'intérieur du bras accroche-flammes 14 (figure 2).

Ces plaques 30, 32 sont de forme approximativement rectangulaire et s'étendent, en direction axiale, vers l'aval depuis le bras 14. Les plaques 30, 32 comprennent des orifices de passage de moyens de fixation de l'anneau-brûleur 26, la plaque radialement interne 30 comprenant en outre un orifice 36 sensiblement cylindrique de passage de la rampe d'alimentation 18 du bras accroche-flammes 14.

L'anneau-brûleur 26 est formé de secteurs annulaires 38 qui sont disposés sensiblement bout à bout et qui s'étendent chacun entre deux bras accroche-flammes 14.

Les extrémités en regard des secteurs 38 de l'anneau-brûleur 26 sont engagées entre les plaques 30, 32 précitées des bras 14 et comprennent des échancrures 40 sensiblement semi-circulaires alignées avec les orifices précités de passage des moyens de fixation de l'anneau-brûleur 26 sur les plaques 30, 32.

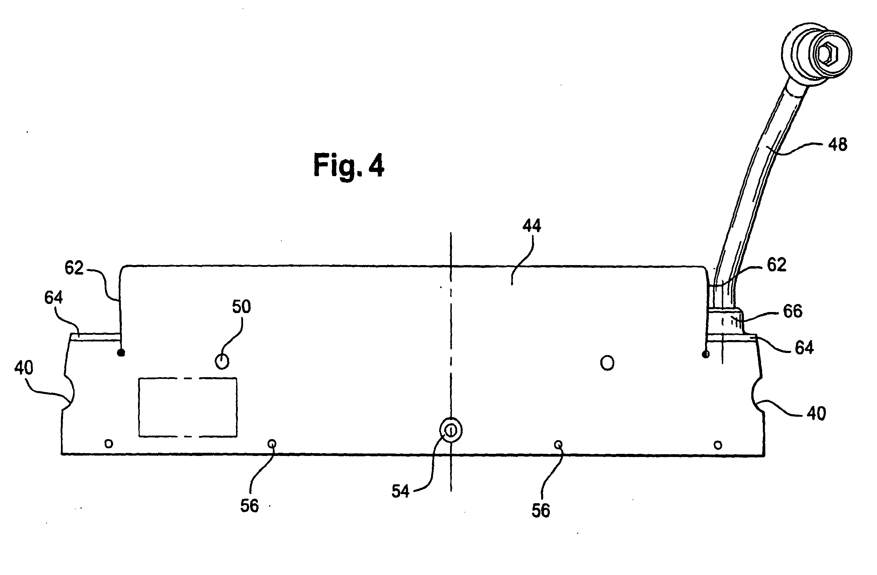

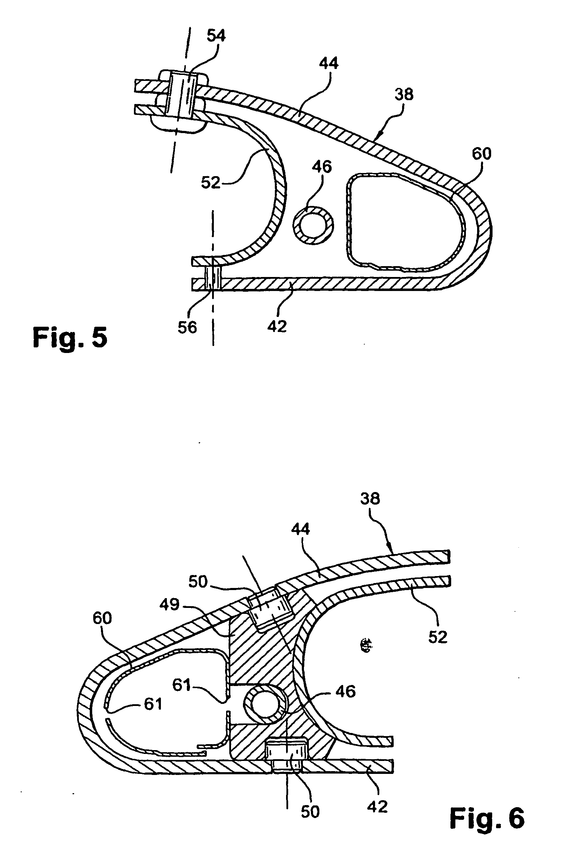

On se réfère désormais aux figures 2 à 6.

Chaque secteur d'anneau 38 a une forme générale de dièdre à sommet arrondi et comprend deux ailes 42, 44, respectivement radialement interne et radialement externe, reliées entre elles du côté amont, l'aile interne 42 étant sensiblement cylindrique et centrée sur l'axe 6 de la chambre de postcombustion 2 et l'aile externe 44 étant légèrement incurvée en section axiale et s'étendant en oblique vers l'extérieur, d'amont en aval.

Chaque secteur d'anneau 38 comprend des moyens d'alimentation en carburant formés d'une rampe en arc de cercle 46 s'étendant circonférentiellement dans le secteur d'anneau 38 et d'un conduit 48 s'étendant entre une extrémité de la rampe 46 et des moyens de raccordement montés dans un orifice du carter externe 4, ce conduit 48 passant par l'ouverture 34 de la plaque 32 et s'étendant sensiblement radialement entre les parois latérales 20 de la partie externe du bras 14.

La rampe 46 comprend des trous de pulvérisation de carburant orientés vers l'aval et est portée dans le secteur d'anneau 38 par deux éléments radiaux 49 s'étendant entre les ailes 42, 44 du secteur 38 et venant en appui sur les surfaces internes de ces ailes 42, 44, ces éléments 49 étant maintenus sur ces ailes 42, 44 par des moyens appropriés 50 tels que des ergots portés par les éléments 49 et engagés dans des trous des ailes 42, 44.

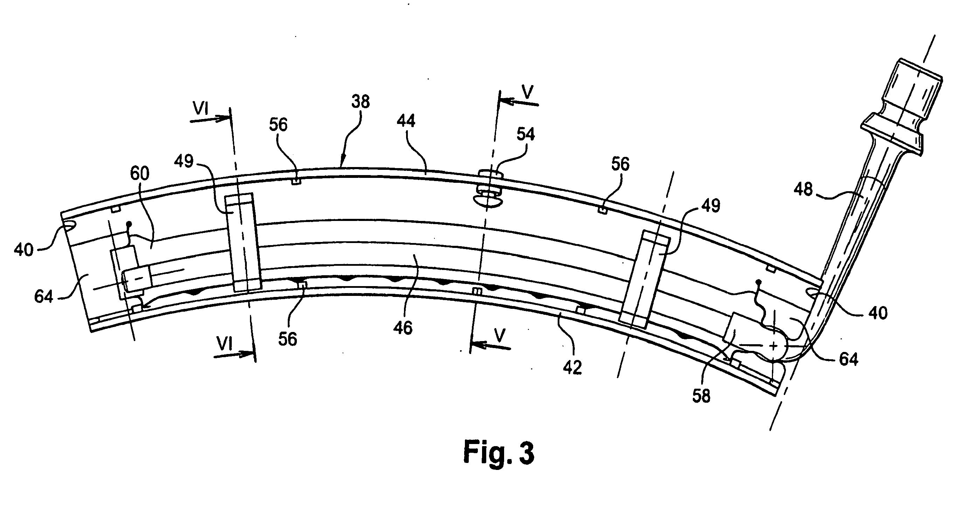

Le bord amont des éléments 49 comporte une découpe en U dans laquelle est engagée la rampe 46 qui est protégée thermiquement du côté aval par une paroi incurvée 52 logée entre les extrémités aval des ailes 42, 44 du secteur 38 de l'anneau-brûleur 26 et qui s'appuie sur un bord aval concave des éléments 49, la paroi incurvée 52 ayant été enlevée en figure 3 pour plus de clarté

La paroi incurvée 52 s'étend sur presque toute la longueur du secteur d'anneau 38 et est fixée sur celui-ci par des moyens appropriés tels que des rivets 54, les extrémités radialement interne et externe de la paroi 52 étant espacées des surfaces internes des ailes 42, 44 au moyen de plots 56 régulièrement répartis sur ces surfaces, pour délimiter des fentes annulaires d'injection d'air et de carburant dans le flux primaire.

L'extrémité de la rampe 46 opposée au conduit 48 est fermée et la liaison entre la rampe 46 et le conduit 48 est réalisée au moyen d'un coude 58.

Chaque secteur d'anneau 38 contient un caisson de distribution d'air 60 s'étendant le long de la rampe d'alimentation 46 du secteur 38 en amont de celle-ci et s'appuyant sur les éléments radiaux 49. Le caisson 60 présente sur toute sa longueur des trous 61 débouchant en aval vers la rampe d'alimentation 46 et en amont vers le fond du secteur d'anneau 38.

Une découpe 62 est formée à chaque extrémité des secteurs d'anneau 38 dans les ailes 42 et 44 à leur jonction amont, les découpes 62 des extrémités en regard des deux secteurs d'anneau 38 portés par un bras 14 étant sensiblement alignées avec l'ouverture 34 de la plaque 32 du bras 14 pour le passage d'une partie du flux secondaire dans les caissons de distribution 60.

Chaque découpe 62 est fermée vers l'aval par une paroi transversale 64 qui fait partie du caisson de distribution d'air 60 du secteur d'anneau 38 ou qui est montée dans le secteur d'anneau 38 dans le prolongement de la paroi aval du caisson de distribution 60.

Une des deux parois transversales 64 du secteur d'anneau 38 comprend un orifice de passage du coude 58 reliant le conduit 48 à la rampe 46, le coude 58 étant maintenu dans cet orifice au moyen d'une douille 66.

En fonctionnement, une partie du flux secondaire qui pénètre dans le bras accroche-flammes 14 passe à travers l'ouverture 34 précitée de la plaque 32 et à travers les découpes 62 des extrémités en regard des deux secteurs d'anneau 38 montés sur le bras 14, puis circule dans les caissons de distribution 60 des deux secteurs d'anneau 38, et passe par les trous de ces caissons vers la rampe d'alimentation 46. Le mélange de cet air et du carburant pulvérisé par la rampe 46 est injecté dans le flux primaire pour y être brûlé.

En mode postcombustion, la température du flux secondaire 12 est de l'ordre de 450°K par exemple, et celle du flux primaire 14 atteint 2000°K. La circulation de l'air dans les secteurs d'anneau 38 permet de refroidir les moyens d'alimentation en air et en carburant des secteurs d'anneau 38, qui ne sont plus exposés directement au flux primaire. Le dispositif selon l'invention permet d'augmenter le rendement du turboréacteur en limitant les pertes de charge du flux primaire et en améliorant les conditions d'injection du carburant dans le flux primaire par l'intermédiaire de l'anneau-brûleur.

La chambre de postcombustion peut par exemple comprendre neuf bras accroche-flammes 14 régulièrement espacés les uns des autres et disposés autour de l'axe 6 du turboréacteur environ tous les 40°, entre lesquels sont disposés neuf secteurs d'anneau-brûleur 38.

## Revendications

1. Chambre de postcombustion (2) d'un turboréacteur à double flux, comprenant une pluralité de bras accroche-flammes (14) s'étendant radialement autour de l'axe (6) de cette chambre (2) dans le flux primaire depuis un carter externe (4), un anneau-brûleur (26) situé dans le flux primaire et formé de secteurs d'anneau (38) montés sensiblement bout à bout sur les bras accroche-flammes (14), et des moyens d'alimentation en air et en carburant des secteurs d'anneau-brûleur (38), **caractérisée en ce que** les moyens d'alimentation en air et en carburant des secteurs d'anneau-brûleur (38) s'étendent entre l'anneau-brûleur (26) et le carter externe (4) de la chambre de postcombustion (2) à l'intérieur des bras accroche-flammes (14) et sont raccordés aux secteurs d'anneau-brûleur (38) aux extrémités de ces secteurs (38).

2. Chambre selon la revendication 1, **caractérisée en ce que** les moyens d'alimentation en air des secteurs d'anneau (38) comprennent des caissons de distribution (60) formés ou logés dans les secteurs d'anneau (38) et alimentés en air par au moins une de leurs extrémités débouchant à l'intérieur d'un bras accroche-flammes (14) dont la partie radialement externe comporte une ouverture de captation d'une partie du flux secondaire circulant dans le carter externe (4).

3. Chambre selon la revendication 2, **caractérisée en ce que** les caissons de distribution d'air (60) comportent à chacune de leurs extrémités une ouverture d'entrée d'air (62) formée par découpe de l'extrémité du secteur d'anneau-brûleur (38).

4. Chambre selon l'une des revendications précédentes, **caractérisée en ce que** les secteurs d'anneau-brûleur (38) comprennent chacun une rampe (46) d'alimentation en carburant qui s'étend sur sensiblement toute la longueur du secteur (38) depuis une extrémité de celui-ci et qui est raccordée à cette extrémité à un conduit (48) s'étendant sensiblement radialement à l'intérieur du bras accroche-flammes (14) jusqu'au carter externe (4).

5. Chambre selon la revendication 4, **caractérisée en ce que** la rampe (46) est portée par des éléments radiaux (49) montés dans le secteur d'anneau brûleur (38) et sur lesquels s'appuient un caisson (60) de distribution d'air, du côté amont, et une paroi (52) de protection thermique de la rampe (46), du côté aval.

6. Chambre selon la revendication 4 ou 5, **caractérisée en ce que** le conduit (48) précité et la rampe (46) d'alimentation en carburant du bras accroche-flammes (14) sont sensiblement dans un même plan passant par l'axe (6) de la chambre de postcombustion (2).

7. Chambre selon la revendication 6, **caractérisée en ce que** le conduit (48) précité est en amont de la rampe d'alimentation (18) du bras accroche-flammes (14).

8. Chambre selon l'une des revendications 4 à 7, **caractérisée en ce que** le conduit radial (48) précité est raccordé à la rampe d'alimentation (46) du secteur d'anneau-brûleur (38) par un coude (58) monté fixement dans un orifice d'une paroi transversale (64) de l'extrémité du secteur d'anneau-brûleur (38), cette paroi délimitant axialement vers l'aval une ouverture d'entrée d'air dans le secteur d'anneau-brûleur (38).

9. Chambre selon l'une des revendications précédentes, **caractérisée en ce qu'**il comprend neuf secteurs d'anneau (38) et neuf bras accroche-flammes (14), les bras (14) étant angulairement espacés les uns des autres d'environ 40°.

## Claims

1. An after-burner chamber (2) of a bypass turbojet, comprising a plurality of flame-holder arms (14) extending radially about the axis (6) of the chamber (2) into the primary flow from an outer casing (4), a burner ring (26) situated in the primary flow and made up of ring sectors (38) mounted substantially end to end on the flame-holder arms (14), and means for feeding air and fuel to the burner ring sectors (38), the device being **characterized in that** the means for feeding air and fuel to the burner ring sectors (38) extend between the burner ring (26) and the outer casing (4) of the after-burner chamber (2) inside the flame-holder arms (14) and are connected to the burner ring sectors (38) at the ends of said sectors (38).

2. A chamber according to claim 1, **characterized in that** the means for feeding the ring sectors (38) with air comprise manifold boxes (60) formed or received in the ring sectors (38) and fed with air via at least one of their ends opening out into the inside of a flame-holder arm (14) whose radially-outer portion includes a capture opening for capturing a fraction of the secondary flow flowing in the outer casing (4).

3. A chamber according to claim 2, **characterized in that** the air manifold boxes (60) have respective air inlet openings (62) at each of their ends formed by cutouts in the ends of the burner ring sectors (38).

4. A chamber according to any preceding claim, **characterized in that** each burner ring sector (38) includes a fuel feed rail (46) extending over substantially the entire length of the sector (38) from one end thereof and connected at said end to a duct (38) extending substantially radially inside the flame-holder arm (14) to the outer casing (4).

5. A chamber according to claim 4, **characterized in that** the rail (46) is carried by radial elements (49) mounted in the burner ring sector (38) and having an air manifold box (60) bearing thereagainst on the upstream side, and, on the downstream side, a wall (52) for thermally protecting the rail (46).

6. A chamber according to claim 4 or claim 5, **characterized in that** the above-mentioned duct (49) and the rail (46) for feeding the flame-holder arm (14) with fuel lies substantially in a common plane containing the axis (6) of the after-burner chamber (2).

7. A chamber according to claim 6, **characterized in that** the above-mentioned duct (46) is upstream from the feed duct (18) of the flame-holder arm (14).

8. A chamber according to any one of claims 4 to 7, **characterized in that** the above-mentioned radial duct (48) is connected to the feed rail (46) of the burner ring sector (38) via a bend (58) secured in an orifice of a transverse end wall (64) of the burner ring sector (38), said wall defining an air inlet opening facing downstream through the burner ring sector (38).

9. A chamber according to any preceding claim, **characterized in that** it has nine ring sectors (38) and nine flame-holder arms (14), the arms (14) being angularly spaced apart from one another by about 40°.

## Patentansprüche

1. Nachbrennkammer (2) eines Zweikreis-TL-Triebwerks, die eine Vielzahl von Flammenhalterarmen (14) aufweist, die sich radial um die Achse (6) dieser Kammer (2) von einem Außengehäuse (4) aus in dem Primärstrom erstrecken, einen Brennerring (26) aufweist, der sich in dem Primärstrom befindet und von Ringsektoren (38) gebildet wird, die im Wesentlichen mit den Enden aneinandergrenzend an den Flammenhalterarmen (14) angebracht sind, sowie Luft- und Brennstoffversorgungsmittel für die Brennerring-Sektoren (38) aufweist,
**dadurch gekennzeichnet,**
**dass** die Luft- und Brennstoffversorgungsmittel für die Brennerring-Sektoren (38) sich zwischen dem Brennerring (26) und dem Außengehäuse (4) der Nachbrennkammer (2) im Inneren der Flammenhalterarme (14) erstrecken und an die Brennerring-Sektoren (38) an den Enden dieser Sektoren (38) angeschlossen sind.

2. Nachbrennkammer nach Anspruch 1,
**dadurch gekennzeichnet,**
**dass** die Luftversorgungsmittel der Ringsektoren (38) Verteilungskästen (60) umfassen, die in den Ringsektoren (38) gebildet oder aufgenommen sind und mit Luft über mindestens eines ihrer Enden versorgt werden, das ins Innere eines Flammenhalterarms (14) mündet, dessen radial äußerer Teil eine Öffnung zum Auffangen eines Teils des in dem Außengehäuse (4) zirkulierenden Nebenstroms enthält.

3. Nachbrennkammer nach Anspruch 2,
**dadurch gekennzeichnet,**
**dass** die Luftverteilungskästen (60) an jedem ihrer Enden eine Lufteintrittöffnung (62) aufweisen, die durch Ausschneiden des Endes des Brennerring-Sektors (38) gebildet wird.

4. Nachbrennkammer nach einem der vorherigen Ansprüche,
**dadurch gekennzeichnet,**
**dass** die Brennernng-Sektoren (38) jeweils eine Brennstoff-Versorgungsleitung (46) aufweisen, die sich von einem Ende des Sektors (38) aus im Wesentlichen über dessen gesamte Länge erstreckt und an diesem Ende an eine Leitung (48) angeschlossen ist, die sich im Wesentlichen radial im Inneren des Flammenhalterarms (14) bis zu dem Außengehäuse (4) erstreckt.

5. Nachbrennkammer nach Anspruch 4,
**dadurch gekennzeichnet,**
**dass** die Versorgungsleitung (46) von radialen Elementen (49) gehalten wird, die in dem Brennerring-Sektor (38) eingebaut sind und auf denen vorne ein Luftverteilungskasten (60) und hinten eine Wärmeschutzwand (52) der Versorgungsleitung (46) aufliegen.

6. Nachbrennkammer nach Anspruch 4 oder 5,
**dadurch gekennzeichnet,**
**dass** die oben genannte Leitung (48) und die Brennstoff-Versorgungsleitung (46) des Flammenhalterarms (14) sich im Wesentlichen in einer und der gleichen Ebene befinden, die durch die Achse (6) der Nachbrennkammer (2) verläuft.

7. Nachbrennkammer nach Anspruch 6,
**dadurch gekennzeichnet,**
**dass** die oben genannte Leitung (48) sich vor der Versorgungsleitung (18) des Flammenhalterarms (14) befindet.

8. Nachbrennkammer nach einem der Ansprüche4 bis 7,
**dadurch gekennzeichnet,**
**dass** die oben genannte radiale Leitung (48) an die Versorgungsleitung (46) des Brennerring-Sektors (38) über einen Krümmer (58) angeschlossen ist, der fest in einer Öffnung einer Querwand (64) des Endes des Brennerring-Sektors (38) angebracht ist, wobei diese Wand eine Lufteintrittsöffnung in dem Brennernng-Sektor (38) axial nach hinten abgrenzt.

9. Nachbrennkammer nach einem der vorherigen Ansprüche,
**dadurch gekennzeichnet,**
**dass** sie neun Brennerring-Sektoren (38) und neun Flammenhalterarme (14) aufweist, wobei die Arme (14) in Winkelabständen von ca. 40° voneinander angeordnet sind.
